# EUROPEAN PATENT APPLICATION

(11) **EP 4 518 186 A1**
(43) Date of publication of application: **05.03.2025**
(21) Application number: 22951404.7
(22) Date of filing: 18.07.2022
(51) Int. Cl.: H04B 7/14, H04B 7/26

(54) **RADIO FREQUENCY ISOLATION MODULE AND COMMUNICATION SYSTEM**

(71) Applicant: Huawei Technologies Co., Ltd., Shenzhen, Guangdong 518129 (CN)
(72) Inventor: SUN, Jie, Shenzhen, Guangdong 518129 (CN); MA, Zhifeng, Shenzhen, Guangdong 518129 (CN); WU, Han, Shenzhen, Guangdong 518129 (CN); DU, Qingzhao, Shenzhen, Guangdong 518129 (CN); SUO, Hailei, Shenzhen, Guangdong 518129 (CN)
(74) Representative: Grünecker Patent- und Rechtsanwälte PartG mbB
(86) International application number: PCT/CN2022/106314
(87) International publication number: WO 2024/016125

(57) **Abstract**

This application provides a radio frequency isolation module and a communication system, which can support output of a multi-band signal, and has an isolation capability, to prevent a reflected signal from affecting a power amplification circuit or a power amplification module. The radio frequency isolation module has lower insertion loss and reduces intermodulation distortion. The radio frequency isolation module may include a splitting circuit, an isolation circuit, and a combining circuit. The isolation circuit includes at least one isolation branch. The splitting circuit includes an input end and N output ends. The N output ends are in a one-to-one correspondence with N frequency bands, one output end is coupled to one isolation branch, and each output end is configured to output a signal of a corresponding frequency band to a coupled isolation branch. Each isolation branch is configured to: transmit a signal provided by one output end of a coupled splitting circuit to the combining circuit, and prevent a signal generated at the combining circuit from being transmitted to an input end coupled to the isolation branch. The combining circuit is configured to: be coupled to an antenna, and combine signals transmitted on isolation branches in the isolation circuit.

## Description

### TECHNICAL FIELD

This application relates to the field of wireless communication technologies, and in particular, to a radio frequency isolation module and a communication system.

### BACKGROUND

At present, a remote radio unit generally supports radio frequency signals of one frequency band. The remote radio unit includes a power amplification module and an isolator, and the power amplification module performs power amplification processing on the radio frequency signal. A function of the isolator is generally to transmit a power-amplified signal to an antenna, and isolate a reflected signal generated at the antenna, to prevent the reflected signal from affecting the power amplification module.

If the remote radio unit supports radio frequency signals of a plurality of frequency bands, the power amplification module in the remote radio unit further needs to support more frequency bands and has a capability of outputting higher power. In addition, the isolator in the remote radio unit also needs to work at higher power, and the isolator can support a plurality of frequency bands.

Performance parameters of the isolator generally include insertion loss and intermodulation distortion. The insertion loss of the isolator generally refers to signal loss generated when the isolator is inserted into a communication system, and may be understood as signal attenuation. When two or more signals with different frequencies are applied to a same non-linear circuit, the signals are mutually modulated to generate signals with new frequencies. If the new frequencies exactly fall within a bandwidth of a channel in which a receiver operates, interference to the receiver is caused. This interference is generally referred to as the intermodulation distortion.

However, an isolator that can support a plurality of frequency bands has relatively large insertion loss and relatively large intermodulation distortion, which causes relatively large insertion loss and relatively large intermodulation distortion of a remote radio unit that supports a plurality of frequency bands, and affects quality of a transmit signal of a transmitter in the communication system. Therefore, it is difficult to apply the isolator to the communication system.

### SUMMARY

Embodiments of this application provide a radio frequency isolation module and a communication system, which can support output of a multi-band signal, and has an isolation capability, to prevent a reflected signal from affecting a power amplification circuit or a power amplification module. The radio frequency isolation module has lower insertion loss, and reduces intermodulation distortion.

According to a first aspect, this application provides a radio frequency isolation module, where the radio frequency isolation module is configured to transmit a target radio frequency signal provided by a power amplification module to an antenna. An operating frequency band of the radio frequency isolation module covers an operating frequency band of the power amplification module, the operating frequency band of the radio frequency isolation module includes N frequency bands, and N is an integer greater than 1. The radio frequency isolation module may include a splitting circuit, an isolation circuit, and a combining circuit. The isolation circuit includes at least one isolation branch. The splitting circuit includes an input end and N output ends, where the input end is configured to be coupled to the power amplification module to receive the target radio frequency signal, the target radio frequency signal includes signals of S frequency bands, and S is an integer less than or equal to N; the N output ends are in a one-to-one correspondence with the N frequency bands, one output end is coupled to one isolation branch, and each output end is configured to output a signal of a corresponding frequency band to a coupled isolation branch; the splitting circuit is configured to: split the target radio frequency signal into a signal of each frequency band included in the S frequency bands, and output the signal by using an output end corresponding to each frequency band. Each isolation branch is coupled to the combining circuit, and is configured to: transmit a signal provided by one output end of a coupled splitting circuit to the combining circuit, and prevent a signal generated at the combining circuit from being transmitted to an input end coupled to the isolation branch. The combining circuit is configured to: be coupled to the antenna, combine signals transmitted by the isolation branches in the isolation circuit, and output a combined signal to the antenna.

In this embodiment of this application, the splitting circuit in the radio frequency isolation module may split the target radio frequency signal, and may output S signals by using S output ends of the splitting circuit. The S signals are in a one-to-one correspondence with S frequency bands, and one output end of the splitting circuit outputs a signal including one frequency band. The S signals may be separately transmitted to the combining circuit by using coupled isolation branches. In this way, requirements on operating frequency bands of the isolation branches in the isolation circuit can be reduced, an isolator or a circulator with lower insertion loss and smaller intermodulation distortion is used, and each isolation branch further has a function of isolating signals generated at the combining circuit, to protect the power amplification module.

In a possible design, the isolation circuit includes N isolation branches, and the N isolation branches are in a one-to-one correspondence with the N output ends. An operating frequency band of the isolation branch covers a frequency band corresponding to the output end coupled to the isolation branch. In such a design, an operating frequency band of each isolation branch includes one frequency band, which reduces a requirement of the isolation branch on the operating frequency band, so that the isolation branch may use the isolator or the circulator with lower insertion loss and smaller intermodulation distortion.

In a possible design, the isolation circuit includes M isolation branches, M is an integer less than N, and one of the M isolation branches is coupled to at least one of the output ends; and an operating frequency band of the isolation branch covers a frequency band respectively corresponding to the at least one of the output ends coupled to the isolation branch. In such a design, an operating frequency band of each isolation branch includes a frequency band corresponding to an output end coupled to each isolation branch, and the operating frequency band of each isolation branch may not need to include the N frequency bands. This reduces requirements of the isolation branches on the operating frequency bands, so that the isolation branch may use the isolator or the circulator with lower insertion loss and smaller intermodulation distortion.

In any one of the foregoing possible designs, the splitting circuit may include at least one splitter. In any one of the foregoing possible designs, the isolation branch may include a circulator.

In any one of the foregoing possible designs, the combining circuit may include a multi-band combiner. Optionally, the combining circuit may further include at least one filter, and the at least one filter may be in a one-to-one correspondence with at least one isolation branch. Each isolation branch may be coupled to the multi-band combiner by using a corresponding filter. An operating frequency band of each filter covers an operating frequency band of an isolation branch coupled to the filter. Each filter may be configured to perform filtering processing on a signal provided by the coupled isolation branch, for example, filter out a noise signal.

Optionally, the operating frequency band of the radio frequency isolation module may cover at least two of the following frequency bands: a frequency band of 758 MHz to 960 MHz, a frequency band of 1.8 GHz, a frequency band of 2.1 GHz, or a frequency band of 2.6 GHz. The operating frequency band of the radio frequency isolation module is not specifically limited in this application, and is merely described as an example for description herein.

According to a second aspect, an embodiment of this application provides a communication system, including a transmitter, a power amplification module, and the radio frequency isolation module provided in any one of the first aspect and the possible designs of the first aspect. The transmitter is configured to generate a first radio frequency signal. The power amplification module is separately coupled to the transmitter and the radio frequency isolation module, and is configured to: amplify the first radio frequency signal to obtain a second radio frequency signal, and output the second radio frequency signal to the radio frequency isolation module. The radio frequency isolation module is configured to be coupled to an antenna, and the radio frequency isolation module is configured to transmit the second radio frequency signal to the antenna.

In this embodiment of this application, the radio frequency isolation module in the communication system has lower insertion loss and reduces intermodulation distortion. In addition, the radio frequency isolation module is disposed between the antenna and the power amplification module, and isolates the antenna from the power amplification module, to prevent a signal at the antenna from affecting the power amplification module.

In a possible design, the power amplification module includes a power splitter, a plurality of power amplification circuits, and a first combiner. The power splitter is coupled to each power amplification circuit, and is configured to: perform power allocation on the first radio frequency signal, and output a third radio frequency signal to each power amplification circuit, where a sum of power of all third radio frequency signals output by the power splitter is the same as power of the first radio frequency signal. Each power amplification circuit is coupled to the first combiner, and is configured to: perform power amplification on the received third radio frequency signal and output the third radio frequency signal to the combiner. The combiner is coupled to the radio frequency isolation module, and is configured to: combine signals separately output by the plurality of power amplification circuits to obtain the second radio frequency signal, and output the second radio frequency signal to the radio frequency isolation module.

In such a design, the plurality of power amplification circuits are disposed in the power amplification module, and signals output by the plurality of power amplification circuits are combined into one path of signal by using the first combiner for output, so that the power amplification module can output one path of radio frequency signals with higher power, thereby improving power of a radio frequency signal transmitted by the communication system.

### BRIEF DESCRIPTION OF DRAWINGS

FIG. 1 is a diagram of an application scenario of a remote radio unit;
FIG. 2 is a diagram of a structure of a remote radio unit;
FIG. 3 is a diagram of a structure of a communication system according to an embodiment of this application;
FIG. 4 is a diagram of a specific structure of a power amplification module;
FIG. 5 is a diagram of a structure of a radio frequency isolation module according to an embodiment of this application;
FIG. 6A is a diagram of a structure of a splitting circuit;
FIG. 6B is a diagram of a specific structure of a splitting circuit;
FIG. 6C is a diagram of a specific structure of another splitting circuit;
FIG. 6D is a diagram of a specific structure of yet another splitting circuit;
FIG. 7A is a diagram of a specific structure of a radio frequency isolation module according to an embodiment of this application;
FIG. 7B is a diagram of a specific structure of another radio frequency isolation module according to an embodiment of this application;
FIG. 8 is a diagram of a structure of yet another radio frequency isolation module according to an embodiment of this application;
FIG. 9 is a diagram of a structure of yet another radio frequency isolation module according to an embodiment of this application;
FIG. 10 is a diagram of a structure of yet another radio frequency isolation module according to an embodiment of this application;
FIG. 11 is a diagram of a structure of yet another radio frequency isolation module according to an embodiment of this application; and
FIG. 12 is a diagram of a structure of yet another radio frequency isolation module according to an embodiment of this application.

### DESCRIPTION OF EMBODIMENTS

In embodiments of this application, "or" describes an association relationship between associated objects and represents that two relationships may exist. For example, A or B may represent the following cases: Only A exists, and only B exists, where A and B may be singular or plural.

The term "coupled" in this application describes a connection relationship between two objects, and may represent two connection relationships. For example, "A is connected to B" may represent the following cases: A is directly connected to B, and A is connected to B through C.

In embodiments of this application, "for example", "in some embodiments", "in another embodiment", and the like are used to represent giving an example, an illustration, or a description. Any embodiment or design solution described as an "example" in this application should not be explained as being more preferred or having more advantages than another embodiment or design solution. To be precise, use of the word "example" is intended to present a concept in a specific manner.

The "antenna" in embodiments of this application may include any suitable configuration, structure, and/or arrangement of one or more antenna elements, components, units, assemblies, and/or arrays. In some examples, the antenna may implement sending and receiving functions using separate sending and receiving antenna elements.

A "power amplification module" in embodiments of this application may include any suitable configuration, structure, and/or arrangement of one or more power amplifiers, components, units, and assemblies.

A "transmitter" in embodiments of this application may include a proper configuration for implementing a sending function, such as a digital signal processor, a digital-to-analog converter, a baseband filter, a radio frequency (radio frequency, RF) modulator, a filter, an RF separator, and a switch. In some examples, the "transmitter" may be a transceiver, and may separately implement sending function and receiving functions. The transceiver may include a proper configuration for implementing a sending function, such as a digital signal processor, a digital-to-analog converter, a baseband filter, a radio frequency (radio frequency, RF) modulator, a filter, an RF separator, and a switch. Alternatively, the transceiver may include a proper configuration for implementing a receiving function, such as a combiner, a demodulator, a baseband filter, and an analog-to-digital converter.

In embodiments of this application, a "path" may be a transmission path, a transmission channel, or a transmission line. One "path" may refer to a transmission path, a transmission channel, or a transmission line. A plurality of "paths" may refer to a plurality of transmission paths, transmission channels, or transmission lines. One "path" of signals may refer to signals transmitted through a transmission path, a transmission channel, or a transmission line. In some examples, that "D" sends one path of signals may mean that signals sent by "D" are transmitted through a transmission path, a transmission channel, or a transmission line. That "D" receives one path of signals may mean that "D" may receive signals transmitted through a transmission path, a transmission channel, or a transmission line. That "D" receives a plurality of paths of signals may mean that "D" may receive signals transmitted through a plurality of transmission paths, transmission lines, or transmission lines.

In embodiments of this application, E is in a "one-to-one correspondence" with F, representing that one E corresponds to one F, and one F corresponds to one E. It should be noted that in embodiments of this application, words such as "first" and "second" are merely used for purpose of distinguishing descriptions, and cannot be understood as an indication or implication of relative importance or an indication or implication of a sequence.

A radio frequency isolation module provided in embodiments of this application may be applied to a plurality of communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, or a 5th-generation (5th-generation, 5G) mobile communication technology. It should be noted that, a specific communication system is not limited in embodiments of this application.

In embodiments of this application, a "frequency band" may be a frequency band that has been divided, and/or a frequency band that is divided in a future version of the frequency band. For example, the "frequency band" may be a frequency band divided according to an existing cellular specification and/or protocol (for example, a 3rd generation partnership project (3rd generation partnership project, 3GPP) protocol, or an LTE protocol), or may be a frequency band divided according to a cellular specification and/or protocol of a future version, or may be a frequency band divided according to a wireless fidelity (wireless fidelity, Wi-Fi) protocol in a wireless local area network, or may be a frequency band divided according to a Bluetooth protocol.

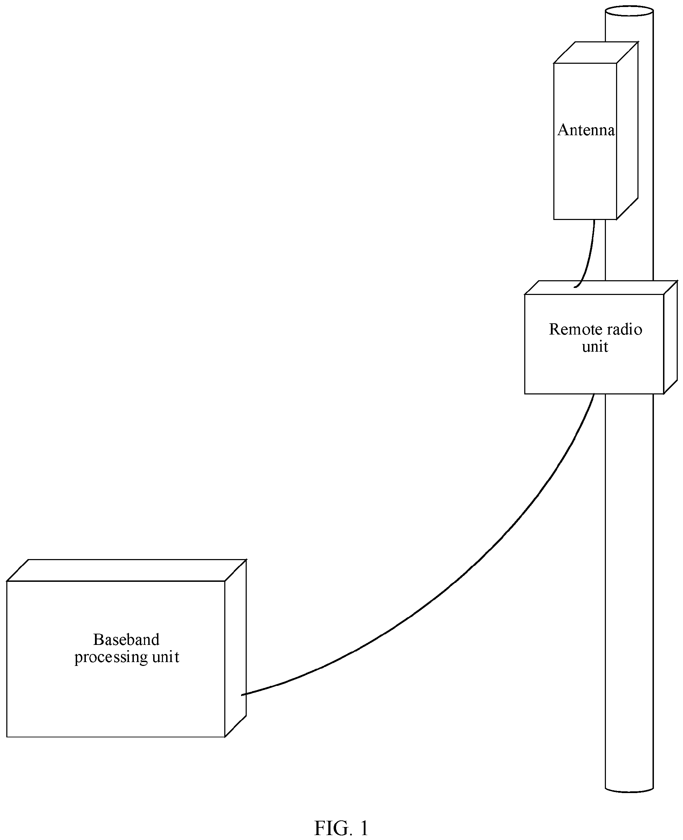

FIG. 1 is a diagram of a communication system architecture to which an embodiment of this application is applicable. As shown in FIG. 1, the communication system architecture may include a baseband processing unit and a remote radio unit (remote radio unit, RRU). The baseband processing unit may be disposed in an equipment room, and the RRU may be disposed near an antenna, for example, may be disposed on a communication tower in which the antenna is located. The baseband processing unit, the RRU, and the antenna shown in FIG. 1 are merely used to describe the communication system architecture by using an example, and do not indicate a quantity of antennas and a quantity of RRUs in the communication system. Generally, the communication system may be implemented as a base station. The base station may include a base station processing unit, at least one antenna, and at least one RRU. The baseband processing unit may be connected to the at least one RRU.

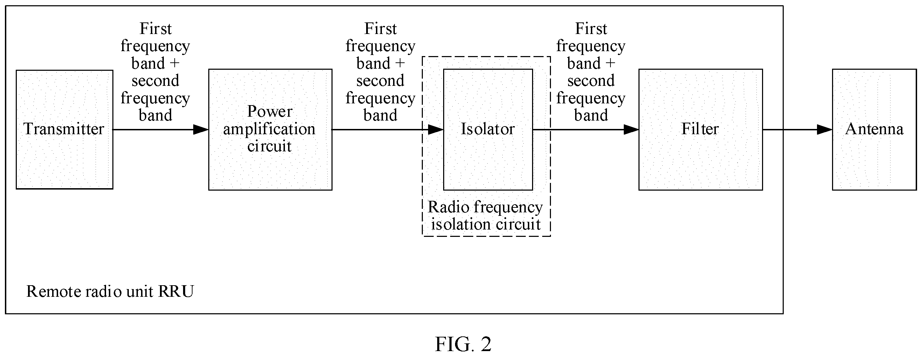

An existing RRU supports a single-band radio frequency signal. To enable the communication system to support radio frequency signals of a plurality of frequency bands, at least two RRUs may be disposed in the communication system, and the at least two RRUs occupy larger space. Alternatively, at least two power amplification modules that support different frequency bands are disposed in a single RRU, so that the single RRU occupies more space. Alternatively, in a single RRU, a power amplification module that supports a plurality of frequency bands is disposed, and has higher power. FIG. 2 is a diagram of a structure of an RRU supporting a plurality of frequency bands. The RRU includes a transmitter (TX), a power amplification circuit, a radio frequency isolation module, and a filter. The transmitter may have a capability of providing a multi-band signal. The signals provided by the transmitter may include a plurality of frequency bands. For example, the signals provided by the transmitter include signals of a first frequency band and a second frequency band. The power amplification circuit in the RRU may support performing power amplification on the multi-band signal, and output the multi-band signal to an isolator. A function of the isolator is generally to transmit a power-amplified signal to the filter, and isolate a reflected signal generated at the filter or the antenna, to prevent the reflected signal from affecting the power amplification circuit.

In some scenarios, the first frequency band and the second frequency band may be any two of the following frequency bands: 1.8 GHz, 2.1 GHz, or 2.6 GHz. Correspondingly, the isolator in the RRU needs to use an isolator whose operating frequency band is 1805 MHz to 2690 MHz. An isolator that can support a plurality of frequency bands in this way may be referred to as an ultra-wideband isolator.

Performance parameters of the isolator in the communication system generally include insertion loss and intermodulation distortion. The insertion loss of the isolator generally refers to signal loss generated when the isolator is inserted into the communication system, and may be understood as signal attenuation. When two or more signals with different frequencies are applied to a same non-linear circuit, the signals are mutually modulated to generate signals with new frequencies. If the new frequencies exactly fall within a bandwidth of a channel in which a receiver operates, interference to the receiver is caused. This interference is generally referred to as the intermodulation distortion. The intermodulation distortion in the communication system also affects the quality of transmitting the signal by the transmitter. The insertion loss of the isolator whose operating frequency band is 1805 MHz to 2690 MHz is generally greater than 0.5 dB. The isolator has a maximum power parameter, and the maximum power parameter represents maximum power at which a signal can be transmitted. The smaller the power of the signal transmitted by the isolator, the smaller the intermodulation distortion of the isolator. When power of a signal transmitted by the isolator in the frequency band of 1805 MHz to 2690 MHz is the maximum power parameter, the intermodulation distortion of the isolator is generally greater than -60 dBc. However, in an existing communication system, the intermodulation distortion is generally required to be less than -70 dBc. It can be learned that in the existing communication system, the power of the signal transmitted by the isolator in the frequency band of 1805 MHz to 2690 MHz needs to be less than the maximum power parameter of the isolator, that is, the isolator in the frequency band of 1805 MHz to 2690 MHz cannot operate at full power.

To reduce the insertion loss of the RRU and improve the intermodulation distortion of the RRU, an embodiment of this application provides a radio frequency isolation module, which can support output of the multi-band signal, and has an isolation capability, to prevent a reflected signal from affecting a power amplification circuit or a power amplification module. The radio frequency isolation module has lower insertion loss and reduces the intermodulation distortion. It should be noted that embodiments of this application may be applied to but are not limited to the RRU, and may be further applied to a unit in the communication system, for example, applied to an active antenna unit (active antenna unit, AAU). An application scenario of the radio frequency isolation module is not limited in this application. An embodiment of this application further provides a communication system, which may include the radio frequency isolation module provided in this application. The following provides detailed descriptions with reference to accompanying drawings. It should be noted that a specific frequency band mentioned in this application is merely used as an example for description, and is not used as a specific limitation on a frequency band applicable to the radio frequency isolation module provided in this application.

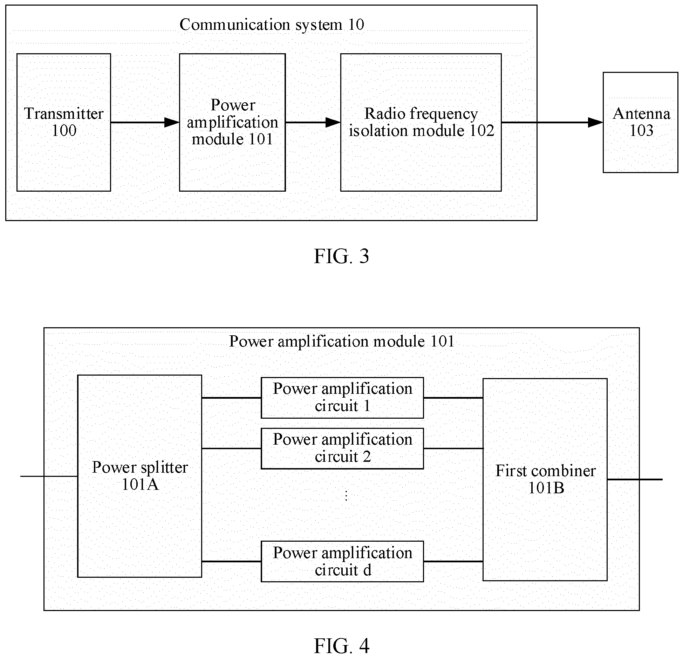

FIG. 3 is a diagram of a structure of a communication system according to an embodiment of this application. A communication system 10 may include a transmitter 100, a power amplification module 101, and the radio frequency isolation module 102 provided in embodiments of this application. The transmitter 100, the power amplification module 101, and the radio frequency isolation module 102 are coupled in sequence. In this embodiment of this application, all signals processed by modules in the communication system 10 are radio frequency signals, which are briefly denoted as signals below.

The transmitter 100 is connected to an input side of the power amplification module 101, and the transmitter 100 may output one path of signals, where the signals include at least one frequency band signal. An operating frequency band of the transmitter 100 includes at least one frequency band. The transmitter 100 may have a capability of outputting signals of at least one frequency band. For example, the transmitter may have a capability of outputting signals of a first frequency band, and one path of signals output by the transmitter 100 may include the signals of the first frequency band. For another example, the transmitter may have a capability of outputting signals of a first frequency band, or may have a capability of outputting signals of a second frequency band. The path of signals output by the transmitter 100 may include the signals of the first frequency band, or the path of signals output by the transmitter 100 include the signals of the second frequency band, or the path of signals output by the transmitter 100 include the signals of the first frequency band and the signals of the second frequency band.

In the communication system 10, an operating frequency band of the power amplification module 101 may include or cover the operating frequency band of the transmitter 100. Frequency bands in which signals output by the power amplification module 101 fall are the same as frequency bands in which signals received by the power amplification module 101 fall, that is, the power amplification module 101 does not change frequency bands of signals. The power amplification module 101 may amplify signals of at least one frequency band provided by the transmitter 100. For example, if one path of signals provided by the transmitter 100 include the signals of the first frequency band, the power amplification module 101 may amplify the signals of the first frequency band. For another example, if one path of signals provided by the transmitter 100 include the signals of the first frequency band and the signals of the second frequency band, the power amplification module 101 may amplify the signals of the first frequency band, and amplify the signals of the second frequency band.

An operating frequency band of the radio frequency isolation module 102 may include or cover an operating frequency band supported by a power amplification module 101. Because the operating frequency band of the power amplification module 101 includes or covers the operating frequency band of the transmitter 100, it can be learned that the operating frequency band supported by the radio frequency isolation module 102 also includes or covers the operating frequency band of the transmitter 100. The radio frequency isolation module 102 has a signal transmission capability and an isolation capability. The radio frequency isolation module 102 provided in this embodiment of this application can support high-power signal transmission, and has lower insertion loss and lower intermodulation distortion. The radio frequency isolation module 102 may isolate a signal at an antenna 103 from the power amplification module 101, to prevent the signal at the antenna 103 from being transmitted to the power amplification module 101, thereby protecting the power amplification module 101.

For example, the power amplification module 101 may include a power splitter 101A, a plurality of power amplification circuits, and a first combiner 101B. FIG. 4 is a diagram of a specific structure of a power amplification module according to an example embodiment. The power amplification module 101 may include a power splitter 101A, d power amplification circuits, and a first combiner 101B, where d is an integer greater than 1.

An input side of the power splitter 101A may include one first input end, and an output side of the power splitter 101A may include d first output ends. The d first output ends of the power splitter 101A are in a one-to-one correspondence with the d power amplification circuits. One first output end corresponds to one power amplification circuit, and one power amplification circuit corresponds to one first output end. The power splitter 101Amay split one path of signals received by the first input end into d signals, and output the d signals to the power amplification circuit corresponding to the first output ends by using the d first output ends. The operating frequency band of the power amplification module 101 may include one or more frequency bands. An operating frequency band of each power amplification circuit may be the same as the operating frequency band of the power amplification module 101. In the d power amplification circuits of the power amplification module 101, each power amplification circuit may amplify a received signal.

An input side of the first combiner 101B may include d second input ends, and an output side of the first combiner 101B may include one second output end. The d second input ends may be in a one-to-one correspondence with the d power amplification circuits, one second input end corresponds to one power amplification circuit, and one power amplification circuit corresponds to one second input end. The power amplification circuits output the amplified signals to corresponding second input ends. The first combiner 101B may combine signals received by the second input ends, and output the combined signals by using the second output end. For example, the combined signals are output to the radio frequency isolation module 102. It can be learned that, the power amplification module 101 in the communication system 10 outputs one path of signals to the radio frequency isolation module 102.

The power amplification module 101 in the communication system 10 provided in this embodiment of this application may output higher power. The radio frequency isolation module 102 provided in this embodiment of this application may support transmission of a signal with higher power. The following describes the radio frequency isolation module 102 provided in this embodiment of this application.

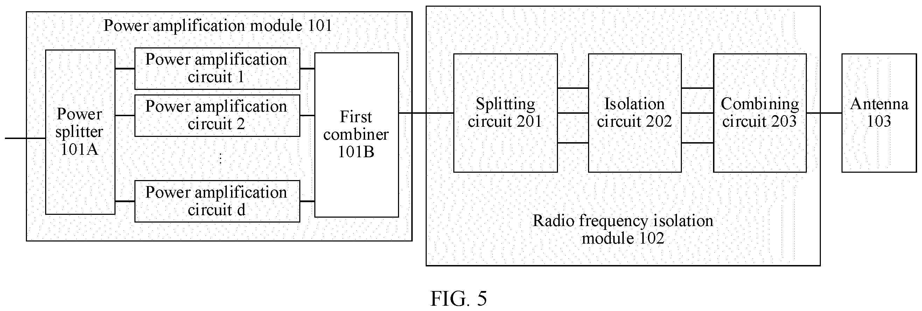

FIG. 5 shows a radio frequency isolation module according to an embodiment of this application. The radio frequency isolation module 102 may be coupled to the power amplification module 101. Optionally, the power amplification module 101 may be a structure shown in FIG. 4. Alternatively, the power amplification module 101 may use another structure. This is not specifically limited in this embodiment of this application.

The radio frequency isolation module 102 may include a splitting circuit 201, an isolation circuit 202, and a combining circuit 203. The isolation circuit 202 may include at least one isolation branch.

The splitting circuit 201 may include an input end and N output ends, where the input end is configured to be coupled to the power amplification module 101, to receive the target radio frequency signal. The target radio frequency signal may include signals of S frequency bands, and S is an integer less than or equal to N. The N output ends are in a one-to-one correspondence with the N frequency bands, one of the output ends is coupled to one of the isolation branches, and each output end is configured to output a signal of a corresponding frequency band to a coupled isolation branch. The splitting circuit 201 may be configured to: split the target radio frequency signal into a signal of each frequency band included in the S frequency bands, and output the signal by using an output end corresponding to each frequency band.

Each isolation branch is coupled to the combining circuit 203, and each isolation branch may be configured to: transmit a signal provided by one of the output ends of a coupled splitting circuit to the combining circuit 203, and prevent a signal generated at the combining circuit 203 from being transmitted to an input end coupled to the isolation branch.

The combining circuit 203 is configured to: be coupled to the antenna 103, combine signals transmitted by the isolation branches in the isolation circuit 202, and output a combined signal to the antenna 103.

First, the splitting circuit 201 is described. The splitting circuit 201 may have an inter-frequency splitting capability. When one path of signals received by the splitting circuit 201 include signals of a plurality of frequency bands, the splitting circuit 102 may split the one path of signals into a plurality of paths of signals, and each of the plurality of paths of signals obtained through splitting include signals of a single frequency band. That is, the splitting circuit 201 may split one path of signals including signals of a plurality of frequency bands into a plurality of paths of signals including signals of a single frequency band for output.

In an example, one path of signals received by the splitting circuit 201 include signals of a first frequency band and signals of a second frequency band. The splitting circuit 201 may split the received signals into two paths of signals. The two paths of signals obtained through splitting are respectively denoted as a first path of signals and a second path of signals. The first path of signals include signals of the first frequency band, and the second path of signals include signals of the second frequency band. In another example, one path of signals received by the splitting circuit 201 include signals of a first frequency band, signals of a second frequency band, and signals of a third frequency band. The splitting circuit 201 may split the received signals into three paths of signals. In the three signals obtained through splitting, a first path of signals include the signals of the first frequency band, a second path of signals include the signals of the second frequency band, and a third path of signals include the signals of the third frequency band. In a possible scenario, when one path of signals received by the splitting circuit 201 include signals of one frequency band, the splitting circuit 201 may output the received one path of signals.

An input side of the splitting circuit 201 is coupled to the power amplification module 101. The input side of the splitting circuit 201 has one input end. The input end of the splitting circuit 201 may be configured to receive one path of signals provided by the power amplification module 101. For example, the input end of the splitting circuit 201 may receive a signal provided by the power amplification module 101. The signal provided by the power amplification module 101 may include signals of at least one frequency band.

An output side of the splitting circuit 201 is coupled to the isolation circuit 202. The output side of the splitting circuit 201 includes a plurality of output ends. An operating frequency band of the splitting circuit 201 includes N frequency bands, and the output side of the splitting circuit 201 includes N output ends, where N is an integer greater than 1. The N output ends are in a one-to-one correspondence with the N frequency bands, one output end corresponds to one frequency band, and one frequency band corresponds to one output end. Each of the N output ends is configured to output one path of signals, and the one path of output signals include signals of a frequency band corresponding to the output end. A plurality of output ends of the splitting circuit 201 are respectively connected to the isolation circuit 202.

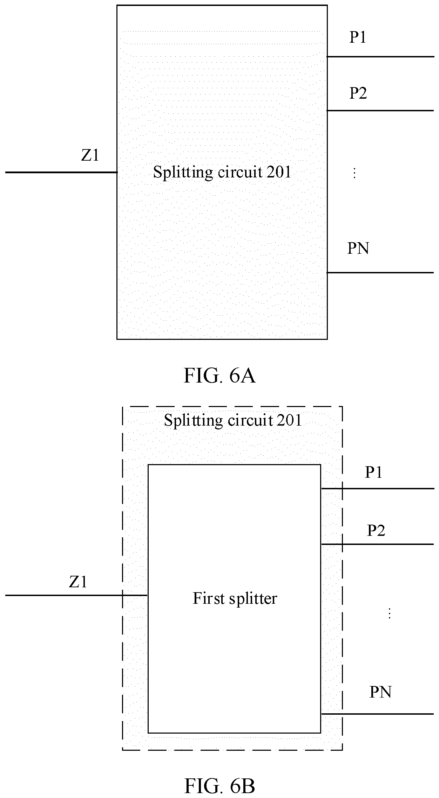

FIG. 6A is a diagram of a structure of a splitting circuit according to an example embodiment. An input side of the splitting circuit 201 may have one input end Z1. An output side of the splitting circuit 201 may have N output ends P, and each output end outputs one path of signals. In this case, the N output ends output N paths of signals. N may be an integer greater than or equal to X. For ease of description, an i^{th} output end of the N output ends is denoted as an output end Pi, where i may be a value of 1 to N, and a frequency band corresponding to the output end Pi is denoted as a frequency band mi.

For example, in a scenario in which the splitting circuit 201 has three output ends, and the splitting circuit 201 has an inter-frequency splitting processing capability of three frequency bands, that is, when X is 3 and N is 3, a frequency band corresponding to an output end P1 is a frequency band m1, a frequency band corresponding to an output end P2 is a frequency band m2, and a frequency band corresponding to an output end P3 is a frequency band m3.

The foregoing function of the splitting circuit 201 may be implemented by using one or more splitters. In an example, the splitting circuit 201 may include one splitter. As shown in FIG. 6B, the splitting circuit 201 may include a first splitter. An input side of the first splitter has one input end, an output side has N output ends, and the N output ends of the first splitter may be implemented as N output ends of the splitting circuit 201.

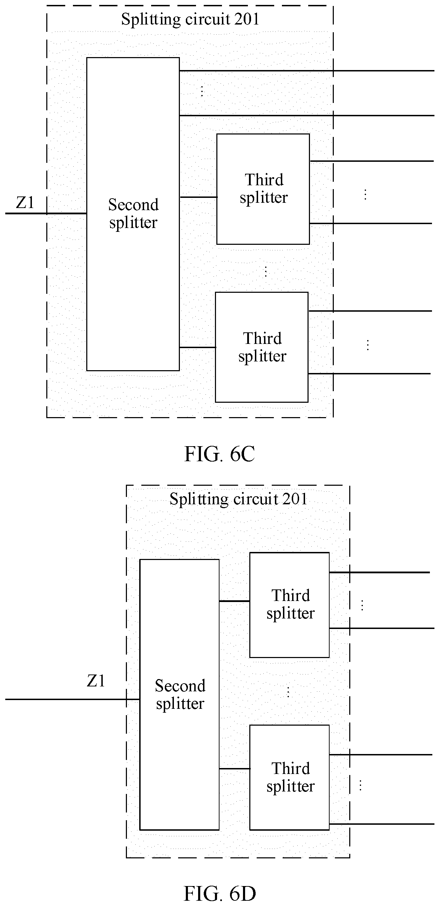

In another example, the splitting circuit 201 may include a plurality of splitters. In the plurality of splitters, each splitter may have a plurality of output ends. As shown in FIG. 6C, the plurality of splitters may include a second splitter and at least one third splitter. An input end of the second splitter is the input end of the splitting circuit 201, and the second splitter has a plurality of output ends. Some output ends may be used as the output ends of the splitting circuit 201, and the other output ends are coupled to an input end of the at least one third splitter. All output ends of the at least one third splitter are also used as the output ends of the splitting circuit 201.

As shown in FIG. 6D, the plurality of splitters may include the second splitter and a plurality of third splitters. An input end of the second splitter is the input end of the splitting circuit 201, the second splitter has a plurality of output ends, the plurality of output ends of the second splitter are in a one-to-one correspondence with the plurality of third splitters, and one output end of the second splitter is coupled to an input end of a corresponding third splitter. All output ends of the plurality of third splitters are used as the output ends of the splitting circuit 201.

In the foregoing example, specific structures of the splitting circuit 201 shown in FIG. 6B to FIG. 6D are merely used as an example for description. This is not limited in this application.

The operating frequency band of the radio frequency isolation module 102 provided in embodiments of this application includes N frequency bands. In other words, the radio frequency isolation module 102 may support N frequency bands. The operating frequency band of the splitting circuit 201 may cover or include the operating frequency band of the radio frequency isolation module 102.

In a possible scenario, the operating frequency band of the radio frequency isolation module 102 is the same as the operating frequency band of the splitting circuit 201. In another possible scenario, the operating frequency band of the splitting circuit 201 covers the operating frequency band of the radio frequency isolation module 102, and an operating frequency band range of the splitting circuit 201 is greater than an operating frequency band range of the radio frequency isolation module 102. For example, the operating frequency band of the radio frequency isolation module 102 includes N frequency bands, and the output side of the splitting circuit 102 includes X output ends, where the X output ends may include the foregoing N output ends. In this case, X is greater than N. That is, the X frequency bands supported by the splitting circuit 102 include the N frequency bands supported by the radio frequency isolation module 102. In this case, the N output ends of the X output ends of the splitting circuit 201 may be in a one-to-one correspondence with the N frequency bands supported by the radio frequency isolation module 102.

Still refer to FIG. 5. The isolation circuit 202 is coupled to an input side of the combining circuit 203, and the isolation circuit 202 may have a capability of unidirectionally transmitting a signal. The isolation circuit 202 may transmit at least one path of signals provided by the splitting circuit 201 to the combining circuit 203, and isolate a signal generated at the combining circuit 203 from the splitting circuit 201. Because one path of signals output by the splitting circuit 201 include only signals of a single frequency band, and different output ends output signals of different frequency bands, the isolation circuit 202 transmits at least one path of signals provided by the splitting circuit 201 to the combining circuit 203, and the isolation circuit 202 transmits signals of at least one frequency band to the combining circuit 203.

An output side of the combining circuit 203 is coupled to the antenna 103, and the combining circuit 203 may have filtering and inter-frequency combining functions. The combining circuit 203 may combine a plurality of paths of signals of different frequency bands on an input side of the splitting circuit 201 into one path of signals and output the path of signals to the antenna 103. Alternatively, the combining circuit 203 may be configured to perform inter-frequency combining on a plurality of paths of signals transmitted by the isolation circuit 202, and output one path of signals to the antenna 103. The path of signals output by the combining circuit 203 to the antenna 103 include signals of at least two frequency bands.

With reference to FIG. 6A, it is assumed that, in the N output ends of the splitting circuit 201, an output end P1 corresponds to a first frequency band, and an output end P2 corresponds to a second frequency band. In an example, one path of signals provided by the power amplification module 101 to the splitting circuit 201 include signals of the first frequency band and signals of the second frequency band. After inter-frequency splitting processing is performed on signals that may be received by the splitting circuit 201, the signals of the first frequency band are output by using the output end P1, and the signals of the second band are output by using the output end P2. The isolation circuit 202 may transmit the signals of the first frequency band provided by the output end P1 and the signals of the second frequency band provided by the output end P2 to the combining circuit 203. The combining circuit 203 may combine the signals of the first frequency band provided by the output end P1 and the signals of the second frequency band provided by the output end P2, that is, combine two paths of signals into one path of signals, and provide the combined signal to the antenna 103. In this case, one path of signals output by the combining circuit 203 to the antenna include the signals of the first frequency band and the signals of the second frequency band.

The operating frequency band of the isolation circuit 202 may be the same as the operating frequency band of the radio frequency isolation module 102, or the operating frequency band of the isolation circuit 202 may cover the operating frequency band of the radio frequency isolation module 102. In a possible design, the output side of the splitting circuit 201 has N output ends, and the isolation circuit 202 includes N isolation branches. In other words, a quantity of isolation branches in the isolation circuit 202 is the same as a quantity of output ends of the splitting circuit 201. The quantity of isolation branches in the isolation circuit 202 is the same as a quantity of input ends of the combining circuit 203. The following separately provides descriptions by using examples.

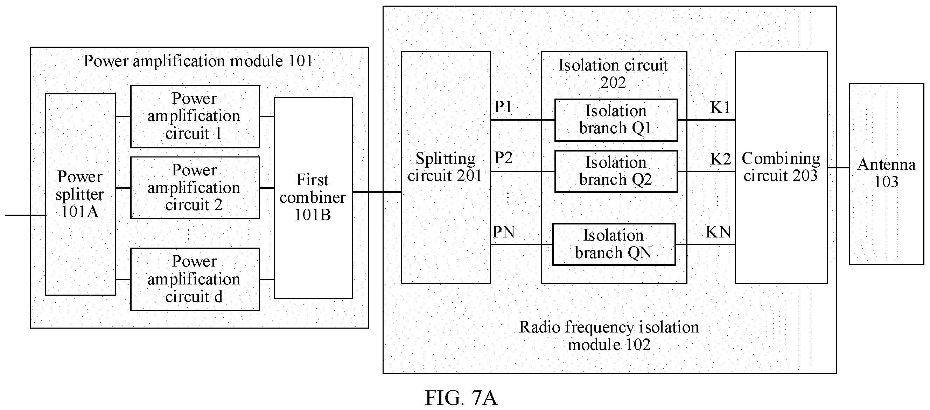

In a possible design, FIG. 7A is an example of a diagram of a specific structure of a radio frequency isolation module. The radio frequency isolation module 102 may be coupled to a power amplification module 101. Optionally, the power amplification module 101 may be the structure shown in FIG. 4. Alternatively, the power amplification module 101 may use another structure. This is not specifically limited in this embodiment of this application.

In the radio frequency isolation module 102, the splitting circuit 201 has N output ends, and the isolation circuit 202 may include N isolation branches. The N isolation branches may be in a one-to-one correspondence with the N output ends P of the splitting circuit 201. One isolation branch corresponds to one output end, one output end corresponds to one isolation branch, and the isolation branch is coupled to the output end P corresponding to the isolation branch. For ease of description, an isolation branch corresponding to the output end Pi is denoted as an isolation branch Qi, where i may be a value of 1 to N. An operating frequency band of the isolation branch Qi may include a frequency band corresponding to the output end Pi. For example, a frequency band corresponding to the output end P1 is a frequency band m1, and an operating frequency band of an isolation branch Q1 includes or covers the frequency band m1. In some examples, the operating frequency band of the isolation branch Qi is the same as the frequency band corresponding to the output end Pi. In some other examples, the operating frequency band of the isolation branch Qi may include the frequency band corresponding to the output end Pi, or the operating frequency band of the isolation branch Qi covers the frequency band corresponding to the output end Pi.

An input side of the combining circuit 203 may have N input ends, and the N input ends are in a one-to-one correspondence with the N isolation branches. One isolation branch corresponds to one input end, one input end corresponds to one isolation branch, and the isolation branch is coupled to a corresponding input end. For ease of description, an i^{th} input end of the N input ends of the combining circuit 203 is denoted as an input end Ki.

A signal output by the output end Pi of the splitting circuit 201 may be transmitted to the input end Ki of the combining circuit 203 through the isolation branch Qi. It can be learned that the output ends of the splitting circuit 201 are respectively transmitted to the combining circuit 203 by using one path of isolation branches, and any isolation branch Qi may isolate a reflected signal generated at the combining circuit 203, to prevent the reflected signal from affecting the power amplification module 101. Any isolation branch Qi may include an isolator or a circulator. Such a design can reduce a requirement of the isolation branch Qi on an operating frequency band range, and an isolator or a circulator with a smaller operating frequency band range can be used to reduce the insertion loss and an intermodulation distortion range of the radio frequency isolation module 102. Intermodulation distortion generated by the isolator or the circulator with a small operating frequency band range when transmit signal power is maximum power can meet a requirement of a communication system on intermodulation distortion. The isolator or the circulator with a small operating frequency band range can operate at full power, so that the radio frequency isolation module 102 can support higher power.

In some scenarios, the combining circuit 203 may include the multi-band combiner, a first side of the multi-band combiner may be respectively coupled to input ends of the combining circuit 203, and a second side of the multi-band combiner may be coupled to the antenna 103.

In some other scenarios, the combining circuit 203 may include the multi-band combiner and at least one filter. The at least one filter may be in a one-to-one correspondence with at least one input end of the combining circuit 203. In other words, at least one filter in the combining circuit 203 may be in a one-to-one correspondence with at least one isolation branch in the isolation circuit 202. An input end of each filter may be coupled to a corresponding input end, or an input end of each filter may be used as the input end of the combining circuit 203 and coupled to a corresponding isolation branch. An output end of each filter is coupled to the multi-band combiner. Each filter may have a filtering function, for example, can filter out a noise signal. An operating frequency band of each filter may be the same as an operating frequency band of a coupled isolation branch. Each filter may perform filtering processing on a signal provided by the coupled isolation branch, and then output the signal to the multi-band combiner. In a possible case, a plurality of filters provide a signal to the multi-band combiner. The multi-band combiner may perform inter-frequency combining processing on signals provided by the plurality of filters, and then output one path of signals. The path of signals are transmitted to the antenna 103 for transmission. In another possible case, one filter provides a signal for the multi-band combiner, and the multi-band combiner may also output the signal provided by the filter to the antenna 103 for transmission.

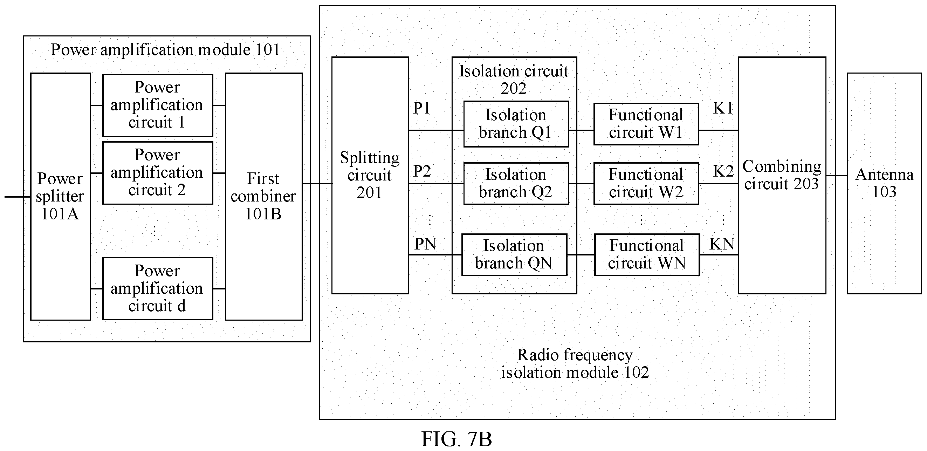

In a possible implementation, based on the structure of the radio frequency isolation module 102 shown in FIG. 7A, as shown in FIG. 7B, the radio frequency isolation module 102 may further include N functional circuits, and the N isolation branches in the isolation circuit 202 are in a one-to-one correspondence with the N functional circuits. A functional circuit corresponding to the isolation branch Qi may be denoted as a functional circuit Wi, where i may be a value of 1 to N. The isolation branch Qi is coupled to the input end Ki of the combining circuit 203 by using the functional circuit Wi. In an example, the functional circuit Qi may be configured to perform impedance matching on a signal transmitted by the isolation branch Qi.

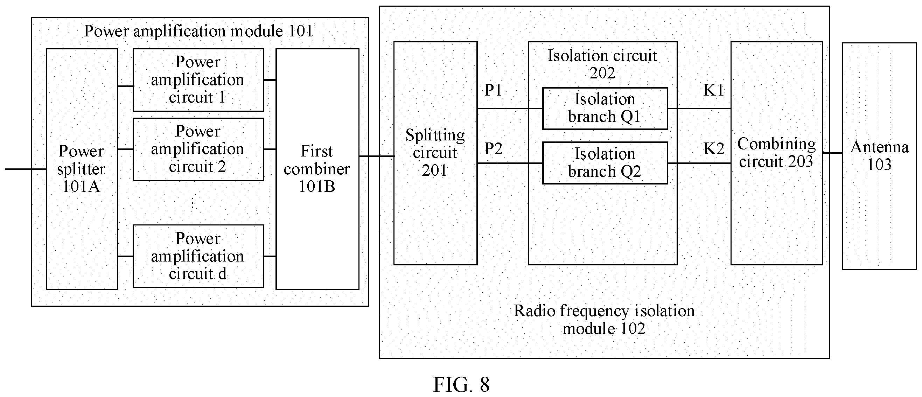

In an example, FIG. 8 is a diagram of a specific structure of a radio frequency isolation module 102. The radio frequency isolation module 102 may be coupled to a power amplification module 101. Optionally, the power amplification module 101 may be the structure shown in FIG. 4. Alternatively, the power amplification module 101 may use another structure. This is not specifically limited in this embodiment of this application.

An operating frequency band of the radio frequency isolation module 102 may include two frequency bands, which are respectively denoted as a first frequency band and a second frequency band. The splitting circuit 201 may include two output ends. An output end P1 corresponds to the first frequency band, and an output end P2 corresponds to the second frequency band. The isolation circuit 202 may include two isolation branches, which are respectively an isolation branch Q1 and an isolation branch Q2. The isolation branch Q1 is coupled to the output end P1, and the isolation branch Q2 is coupled to the output end P2. The combining circuit 203 has two input ends, which are respectively an input end K1 and an input end K2. The input end K1 is coupled to the isolation branch Q1, and the input end K2 is coupled to the isolation branch Q2.

The splitting circuit 201 may perform inter-frequency splitting processing on received signals. If the signals received by the splitting circuit 201 include signals of the first frequency band, the splitting circuit 201 may output the signals of the first frequency band by using the output end P1. If the signals received by the splitting circuit 201 include signals of the second frequency band, the splitting circuit 201 may output the signals of the second frequency band by using the output end P2. If the signals received by the splitting circuit 201 include signals of the first frequency band and signals of the second frequency band, after performing inter-frequency splitting processing on the received signals, the splitting circuit 201 outputs the signals of the first frequency band by using the output end P1, and outputs the signals of the second frequency band by using the output end P2.

The isolation branch Q1 may transmit the signals of the first frequency band provided by the output end P1 to the input end K1 of the combining module, and may prevent a reflected signal generated at the combining circuit 203 from being transmitted to the output end P1. The isolation branch Q2 may transmit the signals of the second frequency band provided by the output end P2 to the input end K2 of the combining circuit 203, and may prevent a reflected signal generated at the combining circuit 203 from being transmitted to the output end P2. The combining circuit 203 may perform inter-frequency combining on the signals of the first frequency band and the signals of the second frequency band that are provided by the isolation branch Q1 and the isolation branch Q2 respectively, combine the signals into one path of signals, and output the combined signals to the antenna 103.

In the foregoing embodiment, the first frequency band may be a frequency band of 758 MHz to 960 MHz, and the second frequency band may be a frequency band of 1.8 GHz. Alternatively, the first frequency band may be a frequency band of 758 MHz to 960 MHz, and the second frequency band may be a frequency band of 2.1 GHz. Alternatively, the first frequency band may be a frequency band of 758 MHz to 960 MHz, and the second frequency band may be a frequency band of 2.6 GHz. Alternatively, the first frequency band may be a frequency band of 1.8 GHz, and the second frequency band may be a frequency band of 2.1 GHz. Alternatively, the first frequency band may be a frequency band of 1.8 GHz, and the second frequency band may be a frequency band of 2.6 GHz. Alternatively, the first frequency band may be a frequency band of 2.6 GHz, and the second frequency band may be a frequency band of 2.1 GHz.

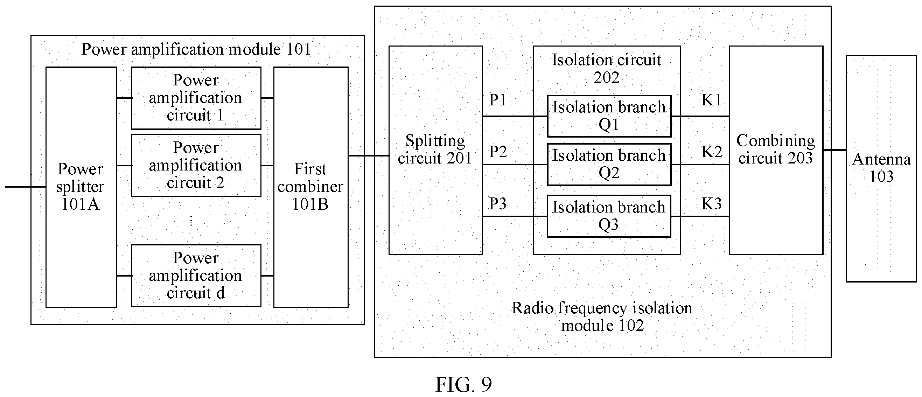

In another example, FIG. 9 is a diagram of a specific structure of a radio frequency isolation module. The radio frequency isolation module 102 may be coupled to a power amplification module 101. Optionally, the power amplification module 101 may be the structure shown in FIG. 4. Alternatively, the power amplification module 101 may use another structure. This is not specifically limited in this embodiment of this application.

The radio frequency isolation module 102 may support three frequency bands, which are respectively denoted as a first frequency band, a second frequency band, and a third frequency band. The splitting circuit 201 may include three output ends. An output end P1 corresponds to the first frequency band, an output end P2 corresponds to the second frequency band, and an output end P3 corresponds to the third frequency band.

The isolation circuit 202 may include three isolation branches. An isolation branch Q1 is coupled to the output end P1, an isolation branch Q2 is coupled to the output end P2, and an isolation branch Q3 is coupled to the output end P3. The combining circuit 203 has three input ends. An input end K1 is coupled to the isolation branch Q1, an input end K2 is coupled to the isolation branch Q2, and an output end K3 is coupled to the isolation branch Q3.

The splitting circuit 201 may perform inter-frequency splitting processing on received signals. If the signals received by the splitting circuit 201 include signals of the first frequency band, the splitting circuit 201 may output the signals of the first frequency band by using the output end P1. If the signals received by the splitting circuit 201 include signals of the second frequency band, the splitting circuit 201 may output the signals of the second frequency band by using the output end P2. If the signals received by the splitting circuit 201 include signals of the third frequency band, the splitting circuit 201 may output the signals of the third frequency band by using the output end P3. If the signals received by the splitting circuit 201 include signals of the first frequency band and signals of the second frequency band, after performing inter-frequency splitting processing on the received signals, the splitting circuit 201 outputs the signals of the first frequency band by using the output end P1, and outputs the signals of the second frequency band by using the output end P2. If the signals received by the splitting circuit 201 include signals of the first frequency band and signals of the third frequency band, after performing inter-frequency splitting processing on the received signals, the splitting circuit 201 outputs the signals of the first frequency band by using the output end P1, and outputs the signals of the third frequency band by using the output end P3. If the signals received by the splitting circuit 201 include signals of the second frequency band and signals of the third frequency band, after performing inter-frequency splitting processing on the received signals, the splitting circuit 201 outputs the signals of the second frequency band by using the output end P2, and outputs the signals of the third frequency band by using the output end P3. If the signals received by the splitting circuit 201 include signals of the first frequency band, signals of the second frequency band, and signals of the third frequency band, after performing inter-frequency splitting processing on the received signals, the splitting circuit 201 outputs the signals of the first frequency band by using the output end P1, outputs the signals of the second frequency band by using the output end P2, and outputs the signals of the third frequency band by using the output end P3.

The isolation branch Q1 may transmit the signals of the first frequency band to the input end K1 of the combining circuit 203, and may prevent a reflected signal generated at the combining circuit 203 from being transmitted to the output end P1. The isolation branch Q2 may transmit the signals of the second frequency band to the input end K2 of the combining circuit 203, and may prevent a reflected signal generated at the combining circuit 203 from being transmitted to the output end P2. The isolation branch Q3 may transmit the signals of the third frequency band to the input end K3 of the combining circuit 203, and may prevent a reflected signal generated at the combining circuit 203 from being transmitted to the output end P3. The combining circuit 203 may perform inter-frequency combining on the signals of the first frequency band, the signals of the second frequency band, and the signals of the third frequency band that are respectively provided by the isolation branch Q1, the isolation branch Q2, and the isolation branch Q3, and after combining the signals into one path of signals, output the combined signals to the antenna.

In the foregoing embodiment, the first frequency band may be a frequency band of 758 MHz to 960 MHz, the second frequency band may be a frequency band of 1.8 GHz, and the third frequency band may be a frequency band of 2.1 GHz. Alternatively, the first frequency band is a frequency band of 758 MHz to 960 MHz, the second frequency band is a frequency band of 2.1 GHz, and the third frequency band is a frequency band of 2.6 GHz. Alternatively, the first frequency band may be a frequency band of 758 MHz to 960 MHz, the second frequency band may be a frequency band of 2.6 GHz, and the third frequency band may be a frequency band of 1.8 GHz. Alternatively, the first frequency band may be a frequency band of 1.8 GHz, the second frequency band may be a frequency band of 2.1 GHz, and the third frequency band may be a frequency band of 2.6 GHz.

In another possible implementation, a quantity of output ends of the splitting circuit 201 may be greater than a quantity of isolation branches in the isolation circuit 202, and the quantity of isolation branches in the isolation circuit 202 is the same as a quantity of input ends of the combining circuit 203. The following separately provides descriptions by using examples. In this implementation, the isolation circuit 202 may include M isolation branches, where M is an integer less than N.

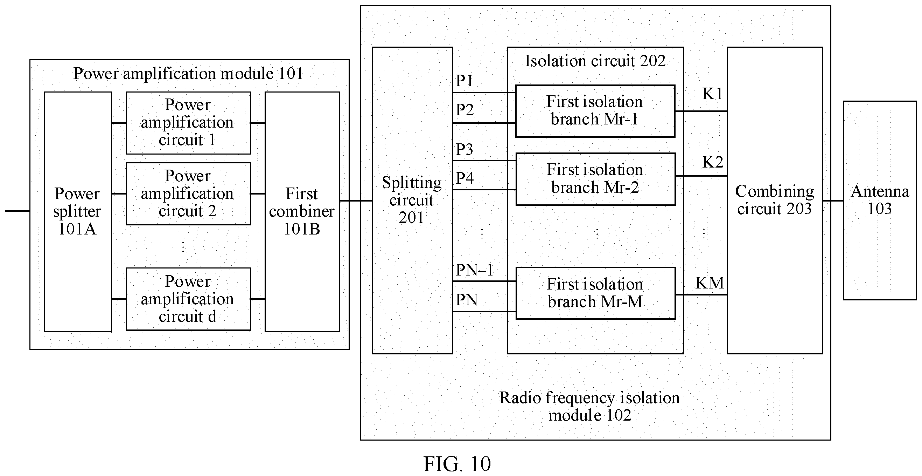

In a possible design, FIG. 10 is an example of a diagram of a specific structure of a radio frequency isolation module. The radio frequency isolation module 102 may be coupled to the power amplification module 101. Optionally, the power amplification module 101 may be the structure shown in FIG. 4. Alternatively, the power amplification module 101 may use another structure. This is not specifically limited in this embodiment of this application. For the splitting circuit 201 in the radio frequency isolation module, refer to related descriptions of the splitting circuit 201 shown in FIG. 4. Details are not described herein again.

In the isolation circuit 202 of the radio frequency isolation module 102, the M isolation branches are M first isolation branches, which are respectively denoted as a first isolation branch Mr-1, a first isolation branch Mr-2, ..., and a first isolation branch Mr-M. For the splitting circuit 201 in the radio frequency isolation module, refer to related descriptions of the splitting circuit 201 shown in FIG. 6A. Details are not described herein again.

One output end of the splitting circuit 201 is coupled to only one of the M first isolation branches. In the M first isolation branches, an input side of any first isolation branch Mr may be coupled to a plurality of output ends of the splitting circuit 201, or any first isolation branch Mr may be coupled to at least two output ends of the splitting circuit 201, and the first isolation branch Mr may receive signals provided by at least two output ends. An output side of any first isolation branch Mr is coupled to an input end of the combining circuit 203.

For example, a first isolation branch Mr-1 is coupled to an output end P1 and an output end P2 of the splitting circuit 201, and is coupled to an input end K1 of the combining circuit 203. An operating frequency band of the first isolation branch Mr-1 may include a frequency band corresponding to the output end P1 and a frequency band corresponding to the output end P2. The first isolation branch Mr-1 may transmit signals provided by the output end P1 and the output end P2 to the input end K1 of the combining circuit 203, and prevent a reflected signal generated at the combining circuit 203 from being transmitted to the output end P1 and the output end P2 of the splitting circuit 201.

Similarly, the first isolation branch Mr-2 is coupled to an output end P3 and an output end P4 of the splitting circuit 201, and is coupled to an input end K2 of the combining circuit 203. An operating frequency band of the first isolation branch Mr-2 may include a frequency band corresponding to the output end P3 and a frequency band corresponding to the output end P4. The first isolation branch Mr-2 may transmit signals provided by the output end P3 and the output end P4 to the input end K2 of the combining circuit 203, and prevent a reflected signal generated at the combining circuit 203 or the antenna 103 from being transmitted to the output end P3 and the output end P4 of the splitting circuit 201.

It should be noted that, in some scenarios, quantities of output ends of the splitting circuits 201 coupled to the first isolation branches may be the same. For example, in the foregoing example, both the first isolation branch Mr-1 and the first isolation branch Mr-2 are connected to two input ends. In other words, quantities of frequency bands covered by the operating frequency bands of the first isolation branches may be the same. The first isolation branch Mr-1 covers two frequency bands, which are respectively the frequency band corresponding to the output end P1 and the frequency band corresponding to the output end P2. The first isolation branch Mr-2 covers two frequency bands, which are respectively the frequency band corresponding to the output end P3 and the frequency band corresponding to the output end P4.

In some other scenarios, quantities of output ends connected to the first isolation branches may be different, or quantities of frequency bands covered by operating frequency bands of the first isolation branches may be different. This is not limited in the embodiments of this application.

In another possible design, the M isolation branches include at least one first isolation branch Mr and at least one second isolation branch Ms. One output end of the splitting circuit 201 is coupled to only one isolation branch in the M isolation branches, or one output end of the splitting circuit 201 is coupled to one first isolation branch, or is coupled to one second isolation branch.

In this design, the input side of any first isolation branch Mr in the M isolation branches may be coupled to the plurality of output ends of the splitting circuit 201, or the first isolation branch Mr may be coupled to at least two output ends of the splitting circuit 201, and the first isolation branch Mr may receive signals provided by the at least two output ends. The output side of any first isolation branch Mr is coupled to one input end of the combining circuit 203. Optionally, an output end of any first isolation branch Mr is coupled to one input end of the combining circuit 203 by using the functional circuit, and the functional circuit coupled to the output end of the first isolation branch Mr may be configured to perform impedance matching on a signal provided by the output end of the first isolation branch Mr.

An input side of any second isolation branch Ms in the M isolation branches may be coupled to one output end of the splitting circuit 201, and the second isolation branch Ms may receive a signal provided by the output end. An output side of the second isolation branch Ms is coupled to one input end of the combining circuit 203. Optionally, an output end of any second isolation branch Ms is coupled to one input end of the combining circuit 203 by using the functional circuit, and the functional circuit coupled to the output end of the second isolation branch Ms may be configured to perform impedance matching on a signal provided by the output end of the second isolation branch Ms.

In such a design, in the M isolation branches, the first isolation branch may include the isolator or the circulator, and the second isolation branch may include the isolator or the circulator. A quantity of frequency bands covered by the operating frequency band of the first isolation branch may be greater than or equal to a quantity of frequency bands covered by the operating frequency band of the second isolation branch.

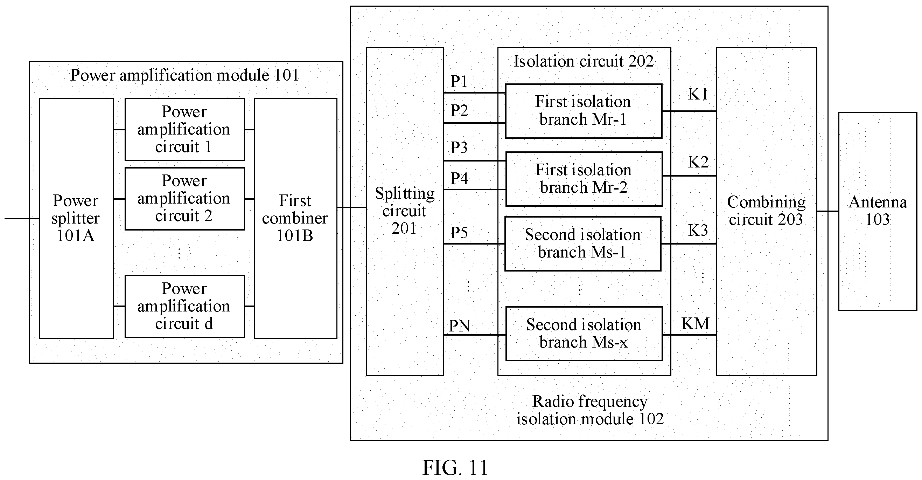

FIG. 11 is an example of a diagram of a specific structure of a radio frequency isolation module. The radio frequency isolation module 102 may be coupled to a power amplification module 101. Optionally, the power amplification module 101 may be the structure shown in FIG. 4. Alternatively, the power amplification module 101 may use another structure. This is not specifically limited in this embodiment of this application. For the splitting circuit 201 in the radio frequency isolation module, refer to related descriptions of the splitting circuit 201 shown in FIG. 4. Details are not described herein again.

An isolation circuit 202 includes M isolation branches. The M isolation branches may include z first isolation branches Mr and x second isolation branches Ms, where z is an integer greater than or equal to 1, x is an integer greater than or equal to 1, and a sum of z and x is M. It should be noted that although the isolation circuit 202 in FIG. 11 shows a case in which z is 2, this is not used as a specific limitation on a value of z.

For example, still refer to FIG. 11. The M isolation branches include two first isolation branches and x second isolation branches. In this case, a value of x is M-2. The two first isolation branches are respectively denoted as a first isolation branch Mr-1 and a first isolation branch Mr-2. The x second isolation branches are respectively denoted as a second isolation branch Ms-1, ..., and a second isolation branch Ms-x.

The first isolation branch Mr-1 is coupled to an output end P1 and an output end P2 of the splitting circuit 201, and is coupled to an input end K1 of a combining circuit 203. An operating frequency band of the first isolation branch Mr-1 may include a frequency band corresponding to the output end P1 and a frequency band corresponding to the output end P2. The first isolation branch Mr-1 may transmit signals provided by the output end P1 and the output end P2 to the input end K1 of the combining circuit 203, and prevent a reflected signal generated at the combining circuit 203 from being transmitted to the output end P1 and the output end P2 of the splitting circuit 201.

Similarly, the first isolation branch Mr-2 is coupled to an output end P3 and an output end P4 of the splitting circuit 201, and is coupled to an input end K2 of the combining circuit 203. An operating frequency band of the first isolation branch Mr-2 may include a frequency band corresponding to the output end P3 and a frequency band corresponding to the output end P4. The first isolation branch Mr-2 may transmit signals provided by the output end P3 and the output end P4 to the input end K2 of the combining circuit 203, and prevent a reflected signal generated at the combining circuit 203 or the antenna 103 from being transmitted to the output end P3 and the output end P4 of the splitting circuit 201.

The second isolation branch Ms-1 is coupled to an output end P5 of the splitting circuit 201, and is coupled to the output end K3 of the combining circuit 203. An operating frequency band of the second isolation branch Ms-1 may include a frequency band corresponding to the output end P5. The second isolation branch Ms-1 may transmit a signal provided by the output end P5 to the input end K3 of the combining circuit 203, and prevent a reflected signal generated at the combining circuit 203 from being transmitted to the output end P5 of the splitting circuit 201.

Similarly, the second isolation branch Ms-x is coupled to an output end PN of the splitting circuit 201, and is coupled to an output end KM of the combining circuit 203. An operating frequency band of the second isolation branch Ms-x may include a frequency band corresponding to the output end PN. The second isolation branch Ms-x may transmit a signal provided by the output end PN to the input end KM of the combining circuit 203, and prevent a reflected signal generated at the combining circuit 203 from being transmitted to the output end PN of the splitting circuit 201.

It can be learned from the foregoing description that a signal output by the output end Pi of the splitting circuit 201 may be transmitted to the combining circuit 203 by using an isolation branch coupled to an output end Pi. In addition, the isolation branch coupled to the output end Pi may isolate the reflected signal generated at the combining circuit 203, to prevent the reflected signal from affecting the power amplification module. Each isolation branch may include an isolator or a circulator. Such a design can reduce a requirement of each isolation branch on an operating frequency band range, and the isolator or the circulator with a small operating frequency band range is used, to reduce the insertion loss and the intermodulation distortion range of the radio frequency isolation module. In addition, the radio frequency isolation module can support higher power.

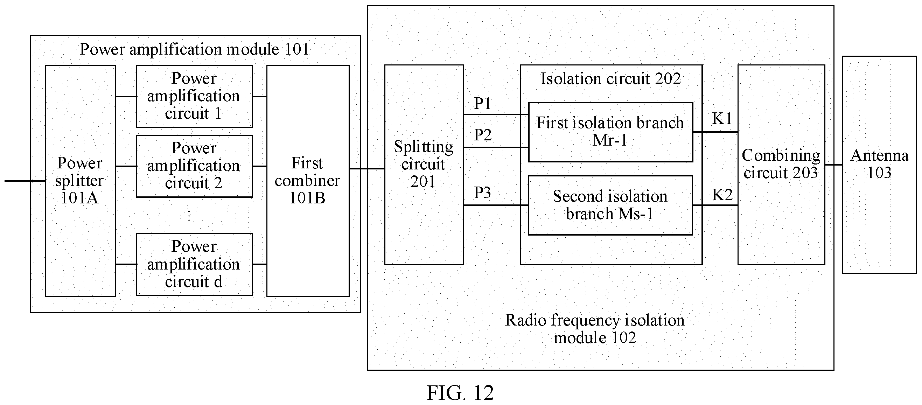

In another example, FIG. 12 is a diagram of a specific structure of a radio frequency isolation module. The radio frequency isolation module 102 may be coupled to a power amplification module 101. Optionally, the power amplification module 101 may be the structure shown in FIG. 4. Alternatively, the power amplification module 101 may use another structure. This is not specifically limited in this embodiment of this application. For the splitting circuit 201 in the radio frequency isolation module, refer to related descriptions of the splitting circuit 201 shown in FIG. 4. Details are not described herein again.

The radio frequency isolation module 102 may support three frequency bands, which are respectively denoted as a first frequency band, a second frequency band, and a third frequency band. The splitting circuit 201 may include three output ends. An output end P1 corresponds to the first frequency band, an output end P2 corresponds to the second frequency band, and an output end P3 corresponds to the third frequency band. The isolation circuit 202 includes two isolation branches, which are respectively a first isolation branch Mr-1 and a second isolation branch Ms-1.

The first isolation branch Mr-1 is coupled to the output end P1 and the output end P2, and the second isolation branch Ms-1 is coupled to the output end P3. The combining circuit 203 has two input ends, the input end K1 is coupled to the first isolation branch Mr-1, and the input end K2 is coupled to the second isolation branch Ms-1.

The splitting circuit 201 may perform inter-frequency splitting processing on received signals. If the signals received by the splitting circuit 201 include signals of the first frequency band, the splitting circuit 201 may output the signals of the first frequency band by using the output end P1. If the signals received by the splitting circuit 201 include signals of the second frequency band, the splitting circuit 201 may output the signals of the second frequency band by using the output end P2. If the signals received by the splitting circuit 201 include signals of the third frequency band, the splitting circuit 201 may output the signals of the third frequency band by using the output end P3. If the signals received by the splitting circuit 201 include signals of the first frequency band and signals of the second frequency band, after performing inter-frequency splitting processing on the received signals, the splitting circuit 201 outputs the signals of the first frequency band by using the output end P1, and outputs the signals of the second frequency band by using the output end P2. If the signals received by the splitting circuit 201 include the signals of the first frequency band and the signals of the third frequency band, after performing inter-frequency splitting processing on the received signals, the splitting circuit 201 may output the signals of the first frequency band by using the output end P1, and output the signals of the third frequency band by using the output end P3. If the signals received by the splitting circuit 201 include signals of the second frequency band and signals of the third frequency band, after performing inter-frequency splitting processing on the received signals, the splitting circuit 201 outputs the signals of the second frequency band by using the output end P2, and outputs the signals of the third frequency band by using the output end P3. If the signals received by the splitting circuit 201 include signals of the first frequency band, signals of the second frequency band, and signals of the third frequency band, after performing inter-frequency splitting processing on the received signals, the splitting circuit 201 outputs the signals of the first frequency band by using the output end P1, outputs the signals of the second frequency band by using the output end P2, and outputs the signals of the third frequency band by using the output end P3.

The first isolation branch Mr-1 may transmit the signals of the first frequency band provided by the output end P1 to the input end K1 of the combining circuit 203, and transmit the signals of the second frequency band provided by the output end P2 to the input end K1 of the combining circuit 203, and may prevent a reflected signal generated at the combining circuit 203 from being transmitted to the output end P1 and the output end P2. The second isolation branch Ms-1 may transmit the signals of the third frequency band provided by the output end P3 to the input end K3 of the combining circuit 203, and may prevent a reflected signal generated at the combining circuit 203 from being transmitted to the output end P3. The combining circuit 203 may perform inter-frequency combining on the signals of the first frequency band and the signals of the second frequency band that are provided by the first isolation branch Mr-1 and the signals of the third frequency band provided by the second isolation branch Ms-1, and after combining the signals into one path of signals, output the combined signal to the antenna 103.

In the foregoing embodiment, the first frequency band may be a frequency band of 758 MHz to 960 MHz, the second frequency band may be a frequency band of 1.8 GHz, and the third frequency band may be a frequency band of 2.1 GHz. Alternatively, the first frequency band may be a frequency band of 758 MHz to 960 MHz, the second frequency band may be a frequency band of 2.1 GHz, and the third frequency band may be a frequency band of 2.6 GHz. Alternatively, the first frequency band may be a frequency band of 758 MHz to 960 MHz, the second frequency band may be a frequency band of 2.6 GHz, and the third frequency band may be a frequency band of 1.8 GHz. Alternatively, the first frequency band may be a frequency band of 1.8 GHz, the second frequency band may be a frequency band of 2.1 GHz, and the third frequency band may be a frequency band of 2.6 GHz.

It is clear that a person skilled in the art can make various modifications and variations to this application without departing from the protection scope of this application. In this case, if the modifications and variations of this application fall within the scope of the claims of this application and equivalent technologies thereof, this application also intends to include the modifications and variations.

## Claims

1. A radio frequency isolation module, wherein the radio frequency isolation module is configured to transmit a target radio frequency signal provided by a power amplification module to an antenna, wherein an operating frequency band of the radio frequency isolation module covers an operating frequency band of the power amplification module, the operating frequency band of the radio frequency isolation module comprises N frequency bands, and N is an integer greater than 1; the radio frequency isolation module comprises a splitting circuit, an isolation circuit, and a combining circuit; and the isolation circuit comprises at least one isolation branch;
the splitting circuit comprises an input end and N output ends, wherein the input end is configured to be coupled to the power amplification module to receive the target radio frequency signal, the target radio frequency signal comprises signals of S frequency bands, and S is an integer less than or equal to N; the N output ends are in a one-to-one correspondence with the N frequency bands, one output end is coupled to one isolation branch, and each output end is configured to output a signal of a corresponding frequency band to a coupled isolation branch; the splitting circuit is configured to: split the target radio frequency signal into a signal of each frequency band comprised in the S frequency bands, and output the signal by using an output end corresponding to each frequency band;
each isolation branch is coupled to the combining circuit, and is configured to: transmit a signal provided by one output end of a coupled splitting circuit to the combining circuit, and prevent a signal generated at the combining circuit from being transmitted to an input end coupled to the isolation branch; and
the combining circuit is configured to: be coupled to the antenna, combine signals transmitted by isolation branches in the isolation circuit, and output a combined signal to the antenna.

2. The module according to claim 1, wherein the isolation circuit comprises N isolation branches, and the N isolation branches are in a one-to-one correspondence with the N output ends; and
an operating frequency band of the isolation branch covers a frequency band corresponding to the output end coupled to the isolation branch.

3. The module according to claim 1, wherein the isolation circuit comprises M isolation branches, M is an integer less than N, and one of the M isolation branches is coupled to at least one of the output ends; and
an operating frequency band of the isolation branch covers a frequency band respectively corresponding to the at least one output end coupled to the isolation branch.

4. The module according to any one of claims 1 to 3, wherein the splitting circuit comprises at least one splitter.

5. The module according to any one of claims 1 to 4, wherein the isolation branch comprises an isolator.

6. The module according to any one of claims 1 to 4, wherein the isolation branch comprises a circulator.

7. The module according to any one of claims 1 to 6, wherein the combining circuit comprises a multi-band combiner.

8. The module according to claim 7, wherein the combining circuit comprises at least one filter, the at least one isolation branch is in a one-to-one correspondence with the at least one filter, each isolation branch is coupled to the multi-band combiner by using a corresponding filter, and an operating frequency band of each filter is the same as an operating frequency band of the coupled isolation branch.

9. A communication system, comprising a transmitter, a power amplification module, and the radio frequency isolation module according to any one of claims 1 to 7, wherein
the transmitter is configured to generate a first radio frequency signal;
the power amplification module is separately coupled to the transmitter and the radio frequency isolation module, and is configured to: amplify the first radio frequency signal to obtain a second radio frequency signal, and output the second radio frequency signal to the radio frequency isolation module; and
the radio frequency isolation module is configured to be coupled to an antenna, and the radio frequency isolation module is configured to transmit the second radio frequency signal to the antenna.

10. The system according to claim 9, wherein the power amplification module comprises a power splitter, a plurality of power amplification circuits, and a first combiner;
the power splitter is coupled to each power amplification circuit, and is configured to: perform power allocation on the first radio frequency signal, and output a third radio frequency signal to each power amplification circuit, wherein a sum of power of all third radio frequency signals output by the power splitter is the same as power of the first radio frequency signal;
each power amplification circuit is coupled to the first combiner, and is configured to: perform power amplification on the received third radio frequency signal and output the third radio frequency signal to the combiner; and
the combiner is coupled to the radio frequency isolation module, and is configured to: combine signals separately output by the plurality of power amplification circuits to obtain the second radio frequency signal, and output the second radio frequency signal to the radio frequency isolation module.
